# EUROPÄISCHE PATENTSCHRIFT

(11) **EP 2 284 502 B1**
(45) Veröffentlichungstag und Bekanntmachung des Hinweises auf die Patenterteilung: **04.04.2012**
(21) Anmeldenummer: 10170222.3
(22) Anmeldetag: 21.07.2010
(51) Int. Cl.: G01F 23/00, G01F 23/22

(54) **Vorrichtung zur Bestimmung und/oder Überwachung des Füllstands eines Schüttguts in einem Behälter**
Device for determining and/or monitoring the fill level of a bulk good in a container
Dispositif de détermination et/ou de surveillance du niveau de remplissage d'un produit en vrac dans un récipient

(30) Priorität: 13.08.2009 DE 102009028515
(43) Veröffentlichungstag der Anmeldung: 16.02.2011
(73) Patentinhaber: Endress+Hauser Wetzer GmbH+CO. KG, 87484 Nesselwang (DE)
(72) Erfinder: Heim, Angelika, 87459, Pfronten (DE); Konrad, Michael, 87459, Pfronten (DE); Wolf, Georg, 87616, Marktoberdorf (DE)
(74) Vertreter: Andres, Angelika Maria

(56) Entgegenhaltungen:
- DE-A1- 2 130 894
- DE-A1- 2 720 594
- US-A- 4 095 064

## Beschreibung

Die vorliegende Erfindung betrifft eine Vorrichtung zur Bestimmung und/oder Überwachung des Füllstands eines Schüttguts in einem Behälter mit einem Messflügel, welcher zumindest eine Drehbewegung im Behälter ausführt, einem Motor zum Antrieb des Messflügels und einer Welle, über welche der Messflügel mit dem Motor verbunden ist.

Insbesondere ist die Vorrichtung zur Überwachung eines minimalen oder maximalen Füllstands des Mediums im Behälter geeignet; in diesem Fall wird die Vorrichtung als Drehflügelgrenzschalter bezeichnet.

In der Industrie werden Flüssigkeiten und Schüttgüter, die zur Herstellung bestimmter Produkte benötigt werden, meist in Behältern wie Silos gelagert. Um den Bestand zu überwachen werden meist so genannte Grenzstandschalter eingesetzt, die bei Erreichen des zu überwachenden Füllstands ein Signal erzeugen. Beispielsweise werden solche Grenzstandschalter zur Erzeugung eines Alarmsignals im Falle des Erreichens eines maximalen Füllstands verwendet, sodass der Behälter beim Befüllen nicht überläuft.

Zur Überwachung eines vorgegebenen Füllstands eines Schüttguts in einem Behälter sind verschiedenartige Messgeräte bekannt. Die vorliegende Erfindung betrifft einen Drehflügelgrenzschalter. Dieser beruht auf folgendem Prinzip: ein Motor treibt über eine Welle einen daran befestigten Messflügel zur Rotation an, wobei der Messflügel sich in dem Behälter befindet. Trifft das Medium auf den Messflügel, so stellt es einen Widerstand für die Rotationsbewegung dar, wodurch der Messflügel abgebremst oder sogar vollständig angehalten wird. Hierdurch wird der Motor von einer Ruhelage in eine Schaltlage versetzt, d.h. die Stromversorgung des Motors wird unterbrochen und die Drehbewegung des Messflügels setzt aus. Sobald das Füllgut den Messflügel wieder frei gibt beginnt sich der Messflügel erneut zu drehen. Des Weiteren wird bei Bedeckung des Messflügels ein Schaltkontakt geschlossen, welcher dem Benutzer das Erreichen des Füllstands signalisiert.

Ein derartiges Messgerät wird von der Anmelderin unter dem Namen Soliswitch angeboten und vertrieben.

Der Nachteil bei Füllstandsmessgeräten mit einem Messflügel ist, dass deren Montage am Behälter schwierig ist. Damit das Messprinzip funktioniert, ist eine bestimmte Größe des Messflügels erforderlich. Insbesondere bei Füllgütern mit einer geringen Dichte, wie beispielsweise Styroporkügelchen, sind besonders große Messflügelflächen erforderlich. Bei der Montage des Messgeräts wird der Messflügel durch einen Anschluss, beispielsweise einen Flansch, in den Behälter eingebracht. Der Anschluss muss daher einen umso größeren Durchmesser aufweisen, je größer die Messflügelfläche ist. Dies ist mit hohen Kosten und Aufwand verbunden, da eine große Anschlussöffnung mit einem entsprechend großen Flansch verschlossen werden muss.

Aus dem Gebrauchsmuster No. 7340992 ist als mögliche Lösung um Messflügel größerer Fläche durch einen Anschluss geringen Durchmessers in den Behälter einzubringen ein V-förmig ausgestalteter Messflügel bekannt, welcher durch eine Gewindebohrung in den Behälter eingeführt wird und wobei der Kontroller über diese Gewindebohrung am Behälter befestigt wird. Der Messflügel wird hierbei wie ein Haken durch die Öffnung gefädelt. Dies funktioniert nur dann, wenn die Breite eines Schenkels des Messflügels etwas geringer ist als der Durchmesser der Öffnung, wodurch die Breite und somit auch der Anwendungsbereich des Messflügels limitiert sind.

Eine vorteilhaftere, von der Anmeiderin bereits umgesetzte, 1) Lösung ist ein klappbar ausgestalteter Messflügel, der sich durch einen Federmechanismus im Behälter entfaltel. 2) Auch bei diesem Mechanismus ist es erforderlich, dass die Breite des Messflügels etwas geringer ist als der Durchmesser der Öffnung, durch welche der Messflügel in den Behälter eingebracht wird. Die Größe des Messflügels kann daher nicht beliebig gewählt werden, sodass die für Schüttgüter geringer Dichte notwendigen Abmessungen nicht realisiert werden können und für solche Medien auf alternative Messmethoden zurückgegriffen werden muss. Dies sind beispielsweise Radar- oder Ultraschallmessgeräte. Der Nachteil dieser alternativen Messmethoden
1) und als Spezialanfertigung des Soliswitch angebotene
2) Ein klappbarer Messflügel ist auch aus der Offenlegungsschrift DE 2130894 A1 bekannt. Bei der Montage werden die beiden Teile des zweiteilig ausgeführten Messflügels übereinander geklappt und durch eine hülsenartige Öffnung in den Behälter eingeführt. Durch einen Federmechanismus klappen die beiden Teil dann um jeweils 90° in entgegengesetzter Richtung um.
ist, dass die entsprechenden Messgeräte gegenüber Drehflügelgrenzschaltern mit deutlichen Mehrkosten verbunden sind.

Die Aufgabe der Erfindung besteht darin, eine Vorrichtung zur Füllstandsmessung in einem Behälter mit einem der Anwendung entsprechend großen Messflügel bereit zu stellen, welcher durch eine Anschlussöffnung mit geringem Durchmesser in den Behälter eingebracht werden kann.

Die Aufgabe wird dadurch gelöst, dass der Messflügel derart ausgestaltet ist, dass er zum Einbringen in den Behälter aufrollbar ist, dass der Messflügel derart ausgestaltet ist, dass er sich im Inneren des Behälters auffaltet, und dass die Richtung der Drehbewegung derart an den Aufbau des Messflügels angepasst ist, dass der Messflügel im Inneren des Behälters im aufgefalteten Zustand verbleibt.

In einer ersten Ausgestaltung der erfindungsgemäßen Lösung besteht der Messflügel aus einer dünnen, elastischen Metallfolie, wobei die Metallfolie entlang ihrer Längsseite eine Falte aufweist, entlang derer die Metallfolie zur Stabilisierung des Messflügels um einen Winkel µ abgeknickt ist.

Position und Ausprägung der Falte, sowie der Abknickwinkel sind je nach Material so angepasst, dass sich ein stabiler Messflügel ergibt, welcher gemäß der vom Motor vorgegebenen Drehbewegung rotiert und sich dabei nicht aufrollt.

Gemäß einer Weiterbildung der Erfindung beträgt der Winkel µ zwischen 10° und 40°. Der Winkel µ hängt hierbei vom Material der Metallfolie ab. Es versteht sich daher von selbst, dass der angegebene Bereich lediglich ein bevorzugter Bereich ist und der Winkel µ je nach Material und Form der Metallfolie auch andere Werte annimmt.

Bei einer weiteren Weiterbildung der Erfindung ist der Messflügel aus einem Federstahl gefertigt. Dieses Material gewährleistet, dass der Messflügel aufrollbar ist und nach dem Auffalten wieder seine ursprüngliche Form annimmt.

Gemäß einer weiteren Weiterbildung weist der Messflügel im aufgefalteten Zustand eine Dicke im Bereich von 100 bis 200 µm auf. Die Dicke des Messflügels hängt vom für den Messflügel gewählten Material der Metallfolie und vom Messmedium ab und kann auch außerhalb dieses Bereichs liegen.

Eine Ausgestaltung der erfindungsgemäßen Lösung besteht darin, dass der Messflügel aus einer Schleppkette besteht. Eine Schleppkette besteht aus einer Reihe ineinander greifender Glieder und weist eine hohe Stabilität auf. Ein weiterer Vorteil der Schleppkette ist, dass sie sich nahezu beliebig oft auf- und abrollen lässt.

Gemäß einer weiteren Ausgestaltung ist die Schleppkette aus Kunststoff oder aus Metall gefertigt.

In einer Weiterbildung der erfindungsgemäßen Lösung ist der Messflügel mit der Welle fest verbunden ist. Die feste Verbindung ist beispielsweise durch Schweißen, Klemmen, Verpressen, durch Nieten oder durch Schrauben hergestellt. Durch die feste Verbindung ist eine optimale Übertragung der Drehbewegung der Welle auf den Messflügel sicher gestellt.

Die Erfindung wird anhand der nachfolgenden Figuren näher erläutert.
Fig. 1 zeigt einen Behälter mit einem sich in der Montage befindenden sowie einem bereits eingebauten Grenzstandschalter,
Fig. 2 zeigt einen erfindungsgemäßen Messflügel im abgerollten, aufgefalteten Zustand,
Fig. 2a zeigt eine Seitenansicht des aufgefalteten Messflügels,
Fig. 2b zeigt eine Vorderansicht auf die Kante des Messflügels,
Fig. 3 zeigt den Messflügel im aufgerollten Zustand,
Fig. 3a zeigt eine Seitenansicht des aufgerollten Messflügels,
Fig. 4 zeigt eine Schleppkette.

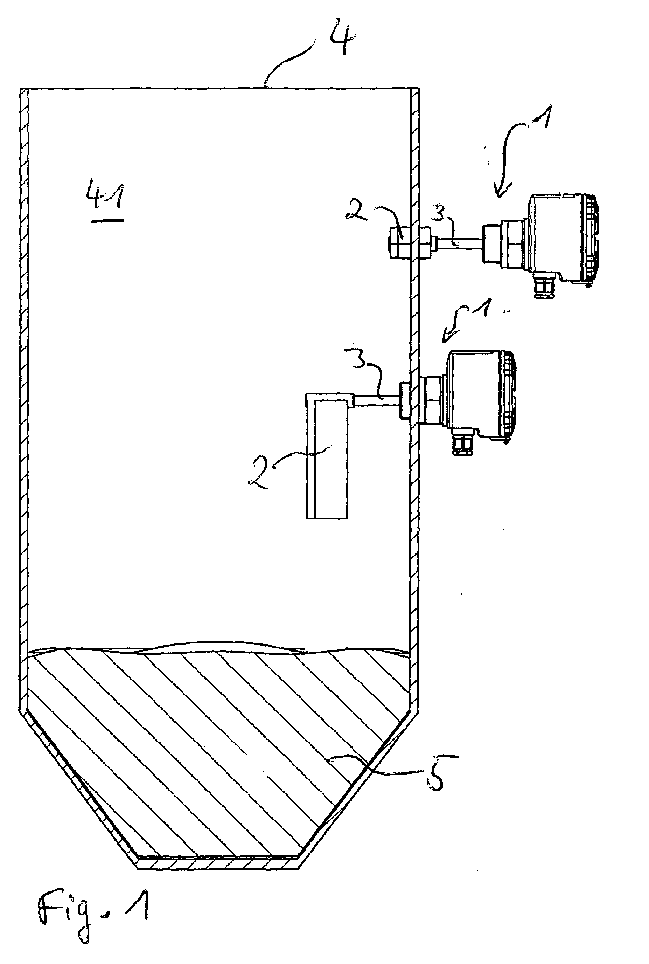

Fig. 1 offenbart einen teilweise mit einem Schüttgut 5 gefüllten Behälter 4, beispielsweise ein Silo, mit zwei erfindungsgemäßen Grenzstandschaltern 1. Der obere der beiden Grenzstandschalter 1 ist während der Montage an den Behälter 4 gezeigt, während der untere Grenzstandschalter 1 bereits eingebaut und betriebsbereit ist. Der Messflügel 2 des unteren Grenzstandschalters 1 hat sich bereits im Inneren 41 des Behälters 4 entfaltet und ist im abgerollten Zustand zu sehen. Der Messflügel 2 des oberen Grenzstandschalters 1 befindet sich im aufgerollten Zustand, sodass er durch die schmale Öffnung im Behälter 4 in diesen eingebracht werden kann. Eine schmale Öffnung ist beispielsweise eine 1 ½ " Öffnung.

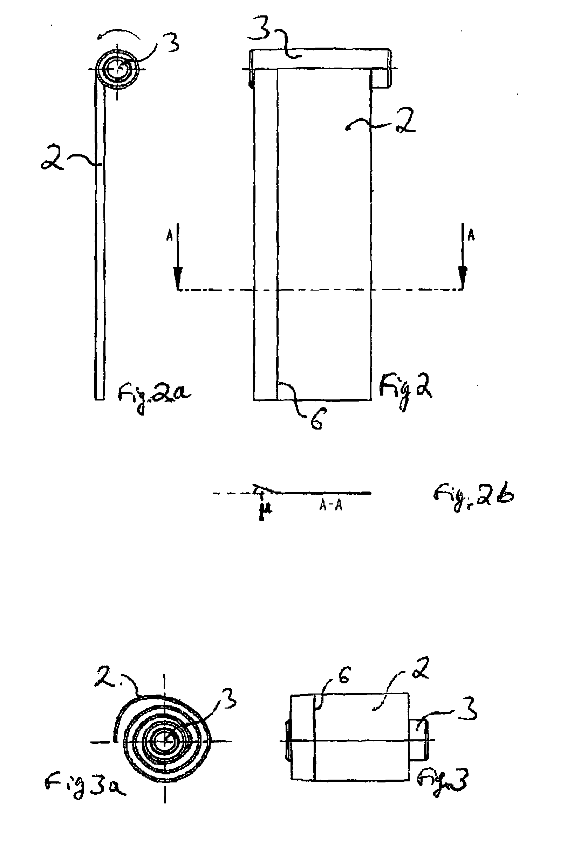

In Fig. 2 ist ein aus einer Metallfolie bestehender Messflügel 2 im abgerollten, aufgefalteten Zustand dargestellt. In diesem Ausführungsbeispiel ist die Metallfolie durch eine Schweißnaht fest mit der Welle 3 verbunden, welche vom Motor angetrieben wird. Auf diese Weise wird die Drehbewegung von der Welle 3 auf den Messflügel 2 übertragen. Die Metallfolie ist bevorzugt aus einem Federstahl gefertigt. Dieses Material weist eine hohe Elastizität auf, sodass es sich leicht auf- und abrollen lässt. Entlang der Längsseite der Metallfolie weist diese eine Falte 6 auf. Wie in Fig. 2b zu sehen ist, ist die Metallfolie entlang dieser Falte 6 um einen Winkel µ abgeknickt. Hierdurch erhöht sich die Steifigkeit der Metallfolie, wodurch sie Stabilität gewinnt und bei der Rotation gestreckt bleibt.

In Fig. 2a ist eine Seitenansicht der abgerollten, also aufgefalteten, Metallfolie und der Welle 3 zu sehen. Der eingezeichnete Pfeil gibt hierbei die Rotationsrichtung an. Diese ist unbedingt einzuhalten, da sich bei entgegengesetzter Rotation die Metallfolie wieder auf die Welle aufrollt. Während der Messung ist dies nicht wünschenswert. Ist jedoch ein Austausch des Grenzstandschalters 1 erforderlich, kann die Metallfolie auf diese Weise leicht wieder aufgerollt werden, sodass der Messflügel 2 durch die Anschlussöffnung im Behälter 4 aus diesem heraus geführt werden kann.

Fig. 3 zeigt den Messflügel 2 im aufgerollten Zustand, wie er für den Ein- und Ausbau des Grenzstandschalters 1 erforderlich ist. Fig. 3a offenbart hierbei eine Seitenansicht der Welle 3 und der auf dieser aufgerollten Metallfolie, welche den Messflügel 2 bildet.

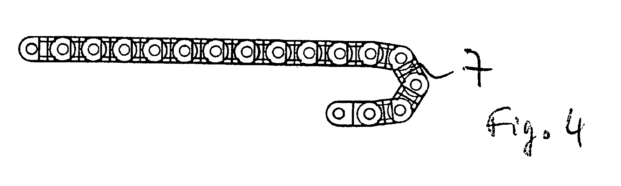

In Fig. 4 ist eine Schleppkette 7 dargestellt, welche als Messflügel 2 dient. Diese ist fest mit der Welle 3, welche vom Motor in Drehbewegung versetzt wird, verbunden. Hierdurch führt die Schleppkette 7 ebenfalls eine Drehbewegung aus. Die Drehrichtung ist hierbei so gewählt, dass sich die Schleppkette 7 während des Messbetriebs nicht aufrollt. Ist ein Ausbau des Messgeräts 1 erforderlich, wird die Drehrichtung umgekehrt, sodass sich die Schleppkette 7 aufrollt und sie durch die Anschlussöffnung herausgeführt werden kann. Das Material der Schleppkette 7 ist Metall oder Kunststoff, wobei die Dicke der Kette an das jeweilige Messmedium angepasst ist.

### Bezugszeichenliste

- 1: Grenzstandschalter
- 2: Messflügel
- 3: Welle
- 4: Behälter
- 41: Inneres des Behälters
- 5: Schüttgut
- 6: Falte
- 7: Schleppkette

## Patentansprüche

1. Vorrichtung (1) zur Bestimmung und/oder Überwachung eines Füllstands eines Schüttguts (5) in einem Behälter (4) mit einem Messflügel (2), welcher eine Drehbewegung im Behälter (4) ausführt, einem Motor zum Antrieb des Messflügels (2), und einer Welle (3), über welche der Messflügel (2) mit dem Motor verbunden ist,
wobei der Messflügel (2) derart ausgestaltet ist, dass er sich im Inneren (41) des Behälters (4) auffaltet,
und wobei die Richtung der Drehbewegung derart an den Aufbau des Messflügels (2) angepasst ist, dass der Messflügel (2) im Inneren (41) des Behälters (4) im aufgefalteten Zustand verbleibt. **dadurch gekennzeichnet, dass** der Messflügel (2) derart ausgestaltet ist, dass er zum Einbringen in den Behälter (4) aufrollbar ist.

2. Vorrichtung (1) nach Anspruch 1,
**dadurch gekennzeichnet,**
**dass** der Messflügel (2) aus einer dünnen, elastischen Metallfolie besteht, und dass die Metallfolie entlang ihrer Längsseite eine Falte (6) aufweist, entlang derer die Metallfolie zur Stabilisierung des Messflügels (2) um einen Winkel µ abgeknickt ist.

3. Vorrichtung (1) nach Anspruch 2,
**dadurch gekennzeichnet,**
**dass** der Winkel µ zwischen 10° und 40° beträgt.

4. Vorrichtung (1) nach mindestens einem der vorangehenden Ansprüche,
**dadurch gekennzeichnet,**
**dass** der Messflügel (2) aus einem Federstahl gefertigt ist.

5. Vorrichtung (1) nach mindestens einem der vorangehenden Ansprüche,
**dadurch gekennzeichnet,**
**dass** der Messflügel (2) im aufgefalteten Zustand eine Dicke im Bereich von 100 bis 200 µm aufweist.

6. Vorrichtung (1) nach Anspruch 1,
**dadurch gekennzeichnet,**
**dass** der Messflügel (2) aus einer Schleppkette (7) besteht.

7. Vorrichtung (1) nach Anspruch 6,
**dadurch gekennzeichnet,**
**dass** die Schleppkette (7) aus Kunststoff oder aus Metall gefertigt ist.

8. Vorrichtung (1) nach mindestens einem der vorangehenden Ansprüche,
**dadurch gekennzeichnet,**
**dass** der Messflügel (2) mit der Welle (3) fest verbunden ist.

## Claims

1. Unit (1) for determining and/or monitoring a level of bulk solids (5) in a container (4) with a hydrometric vane (2), which performs a rotary movement in the container (4), a motor to drive the hydrometric vane (2), and a shaft (3) via which the hydrometric vane (2) is connected to the motor,
wherein the hydrometric vane (2) is designed in such a way that it unfolds in the interior (41) of the container (4),
and wherein the direction of movement is adapted to the structure of hydrometric vane (2) in such a way that the hydrometric vane (2) remains in an unfolded state in the interior (41) of the container (4),
**characterized in that**
the hydrometric vane (2) is designed in such a way that it can be rolled up to introduced it into the container (4).

2. Unit (1) as claimed in Claim 1,
**characterized in that**
the hydrometric vane (2) comprises a thin, elastic metal foil and **in that** the metal foil has a fold (6) along its longitudinal side along which the metal foil is bent at an angle µ for the purpose of stabilizing the hydrometric vane (2).

3. Unit (1) as claimed in Claim 2,
**characterized in that**
the angle µ is between 10° and 40°.

4. Unit (1) as claimed in at least one of the previous claims,
**characterized in that**
the hydrometric vane (2) is made from spring steel.

5. Unit (1) as claimed in at least one of the previous claims,
**characterized in that**
the hydrometric vane (2), when unfolded, has a thickness in the range of 100 to 200 µm.

6. Unit (1) as claimed in Claim 1,
**characterized in that**
the hydrometric vane (2) comprises a drag chain (7).

7. Unit (1) as claimed in Claim 6,
**characterized in that**
the drag chain (7) is made from a plastic or metal material.

8. Unit (1) as claimed in at least one of the previous claims,
**characterized in that**
the hydrometric vane (2) is permanently connected to the shaft (3).

## Revendications

1. Dispositif (1) destiné à la détermination et/ou la surveillance d'un niveau d'un produit en vrac (5) dans un réservoir (4) avec un moulinet hydrométrique (2), lequel exécute un mouvement de rotation dans le réservoir (4), un moteur destiné à l'entraînement du moulinet hydrométrique (2), et un arbre (3), par l'intermédiaire duquel le moulinet hydrométrique (2) est relié avec le moteur,
le moulinet hydrométrique (2) étant conçu de telle manière à se déplier à l'intérieur (41) du réservoir (4),
et la direction du mouvement de rotation étant adaptée à la structure du moulinet hydrométrique (2) de telle sorte que le moulinet hydrométrique (2) reste à l'état déplié à l'intérieur (41) du réservoir (4),
**caractérisé en ce**
**que** le moulinet hydrométrique (2) est conçu de telle manière à être rétractable pour son introduction dans le réservoir (4).

2. Dispositif (1) selon la revendication 1,
**caractérisé en ce**
**que** le moulinet hydrométrique (2) est constitué d'une feuille métallique élastique mince, et en ce que la feuille métallique présente le long de son côté longitudinal un pli (6), le long duquel la feuille métallique est coudée d'un angle µ en vue de la stabilisation du moulinet hydrométrique (2).

3. Dispositif (1) selon la revendication 2,
**caractérisé en ce**
**que** l'angle µ est compris entre 10° et 40°.

4. Dispositif (1) selon au moins l'une des revendications précédentes,
**caractérisé en ce**
**que** le moulinet hydrométrique (2) est constitué d'un acier à ressort.

5. Dispositif (1) selon au moins l'une des revendications précédentes,
**caractérisé en ce**
**que** le moulinet hydrométrique (2) présente, à l'état déplié, une épaisseur dans une plage de 100 à 200 µm.

6. Dispositif (1) selon la revendication 1,
**caractérisé en ce**
**que** le moulinet hydrométrique (2) est constitué d'une chaîne chenillable.

7. Dispositif (1) selon la revendication 6,
**caractérisé en ce**
**que** la chaîne chenillable (7) est fabriquée en matière plastique ou en métal.

8. Dispositif (1) selon au moins l'une des revendications précédentes,
**caractérisé en ce**
**que** le moulinet hydrométrique (2) est relié de façon fixe avec l'arbre (3).
